# FASCICULE DE BREVET EUROPEEN

(11) **EP 0 863 558 B1**
(45) Date de publication et mention de la délivrance du brevet: **14.02.2001**
(21) Numéro de dépôt: 98400488.7
(22) Date de dépôt: 02.03.1998
(51) Int. Cl.: H01M 2/24

(54) **Dispositif de traversée étanche d'une connexion électrique à travers une paroi isolante séparant deux faisceaux d'électrodes d'un générateur électrochimique**
Hermetisch abgedichtete Durchführung einer elektrischen Verbindung durch eine isolierende Wand, derwelche zwei Elektrodegruppen eines elektrochemischen Generators trennt
A sealed leading-through device of an electric connection through an insulating wall separating two groups of electrodes of an electrochemical generator

(30) Priorité: 03.03.1997 FR 9702493
(43) Date de publication de la demande: 09.09.1998
(73) Titulaire: ALCATEL, 75008 Paris (FR)
(72) Inventeur: Verhoof, Roelof, 33200 Bordeaux (FR); Genton, Alain, 33200 Bordeaux (FR); Barbotin, Jean-Loup, 33370 Pompignac (FR)
(74) Mandataire: Doressamy, Clarisse

(56) Documents cités:
- EP-A- 0 111 643
- DE-A- 2 419 908
- DE-A- 3 644 785
- US-A- 2 906 804

## Description

La présente invention concerne un dispositif de traversée étanche d'une paroi isolante séparant deux faisceaux d'un générateur électrochimique.

Dans un générateur électrochimique composé d'une pluralité de batteries élémentaires assemblées en série, séparées les unes des autres par une paroi isolante et disposées dans un bac rempli d'un électrolyte, il est nécessaire, pour l'assemblage en série, d'effectuer des connexions entre les batteries élémentaires.

Chaque batterie élémentaire, que l'on appellera faisceau dans la suite, est constituée par la juxtaposition d'une pluralité de plaques d'électrodes positives et négatives alternées séparées par un séparateur. Chaque plaque d'électrode comporte une tête de plaque pour effectuer les liaisons électriques. Toutes les têtes de plaques de même polarité d'un faisceau sont réunies à une première pièce de jonction et de même toutes les têtes de plaques de polarité inverse du faisceau voisin sont réunies à une second pièce de jonction, ces deux pièces constituant un dispositif de liaison électrique devant traverser d'une façon étanche la paroi de séparation des deux faisceaux contigus.

Le document EP 0 111 643 décrit ainsi un tel dispositif dans lequel la première pièce de jonction est une pièce mâle tandis que la deuxième pièce est une pièce femelle, les deux pièces étant emmanchées à force l'une dans l'autre et venant en appui l'une contre l'autre de façon à ne pas écraser la paroi de séparation en matière plastique, un ou deux joints étant prévus de façon à assurer l'étanchéité.

Cet emmanchement de l'une des pièces dans l'autre implique une traction transversale sur les têtes de plaques nécessitant d'augmenter la place disponible au-dessus du faisceau pour allonger la hauteur des têtes de plaques de façon à minimiser l'effort de traction transversal au moment de l'emmanchement.

L'invention propose un autre dispositif de traversée permettant une réduction de la hauteur du générateur et évitant un effort de traction entre têtes de plaques et la matière active.

L'invention a ainsi pour objet un dispositif de traversée étanche d'une paroi isolante séparant deux faisceaux d'un générateur électrochimique comprenant une première pièce de jonction liée à l'extrémité des têtes de plaques assemblées, de même polarité, d'un premier faisceau, une deuxième pièce de fonction liée à l'extrémité des têtes de plaques assemblées, de même polarité, opposée à celle ci-dessus, d'un deuxième faisceau séparé du premier faisceau par ladite paroi isolante, l'une des deux dites pièces de jonction comportant un trou borgne d'axe perpendiculaire à ladite paroi, la partie débouchante du trou étant située du côté de ladite paroi, un joint d'étanchéité coaxial audit trou borgne s'appliquant contre ladite paroi et étant logé dans une gorge de ladite pièce de jonction, caractérisé en ce que l'autre pièce de jonction comporte un alésage traversant, coaxial audit trou borgne et de même section, les deux dites pièces de jonction s'appuyant l'une contre l'autre au travers d'un trou de passage dans ladite paroi sans pénétration ni d'une pièce ni de l'autre dans ledit trou d'une profondeur supérieure à l'épaisseur de ladite paroi, et en ce qu'une pièce d'assemblage est emmanchée à force dans ledit alésage traversant et ledit trou borgne.

Selon une autre caractéristique, l'une des deux dites pièces de jonction porte du côté faisant face à ladite paroi, un cône auto-perçant pénétrant dans la paroi d'une profondeur correspondant à son épaisseur et s'appuyant contre la face de l'autre pièce de jonction appliquée contre ladite paroi.

Cette caractéristique a pour avantage qu'elle permet d'éviter de prévoir un trou de passage dans la paroi isolante de séparation et évite donc d'avoir à aligner précisément les deux pièces de jonction avec le trou.

Avantageusement, c'est la pièce de jonction portant le trou borgne qui porte ce cône auto-perçant.

On va maintenant donner la description d'un exemple de mise en oeuvre de l'invention en se référant au dessin annexé dans lequel :

La figure 1 est une vue partielle en coupe d'un générateur électrochimique montrant un dispositif selon l'invention de traversée étanche d'une paroi séparant deux faisceaux.

La figure 2 montre dans une variante, uniquement le dispositif de traversée étanche, au cours de son assemblage.

La figure 3 montre en perspective un moyen possible de fixation des pièces de jonction aux têtes de plaques.

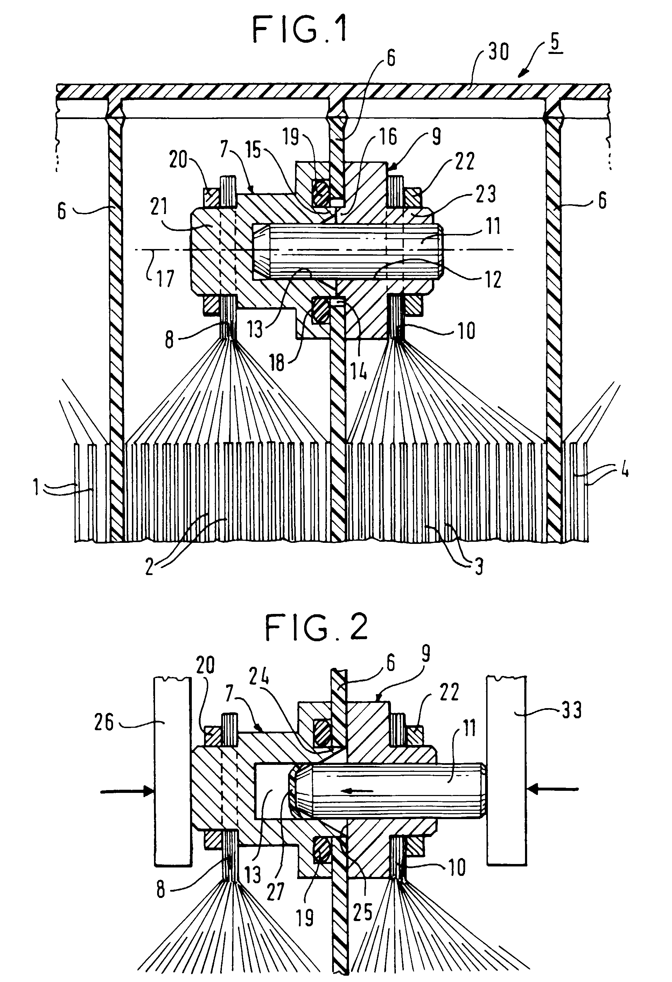

En se référant à la figure 1, on voit une vue partielle d'un générateur électrochimique tel qu'une batterie alcaline par exemple, contenant plusieurs faisceaux 1, 2, 3, 4 situés à l'intérieur d'un bac 5 monobloc en matière plastique. Les faisceaux sont séparés les uns des autres par une paroi isolante 6.

Chaque faisceau constitue une batterie élémentaire constituée d'un assemblage alternatif de plaques positives et de plaques négatives séparées les unes des autres par un séparateur.

Les divers faisceaux sont reliés électriquement en série de telle sorte qu'il est nécessaire d'effectuer des liaisons électriques traversant les diverses parois isolantes 6. Sur la figure, un seul dispositif de traversée a été représenté. Il relie par exemple les plaques positives du faisceau 2 aux plaques négatives du faisceau 3 (ou vice-versa).

Le dispositif comprend une première pièce de jonction 7 liée à l'extrémité 8 des têtes de plaques positives rassemblées du faisceau 2, une deuxième pièce de jonction 9 liée à l'extrémité 10 des têtes de plaques négatives rassemblées du faisceau 3 et une pièce d'assemblage 11 emmanchée à force dans un alésage traversant 12 de la second pièce de jonction 9 et dans un trou borgne 13, coaxial à l'alésage 12 et de même section, de la première pièce de jonction 7. Les deux pièces de jonction 7 et 9 s'appuient l'une contre l'autre au travers d'un trou 14 de passage effectué dans la paroi isolante 6, par des portées d'appui 15, 16, de façon à ne pas écraser la paroi isolante 6 entre les portions périphériques des pièces de jonction 7 et 9. Les pièces de jonction 7 et 9 sont de révolution et leur axe commun 17 est perpendiculaire à la paroi isolante 6. La première pièce de jonction 7 porte une gorge circulaire 18 coaxiale au trou borgne 13 équipée d'un joint d'étanchéité 19 s'appuyant contre la paroi isolante 6.

Dans l'exemple représenté, les portées d'appui 15, 16 des deux pièces de jonction l'une contre l'autre ne pénètrent chacune dans le trou de la paroi 6 que de la moitié de l'épaisseur de la paroi 6 de telle sorte que, lors de l'introduction des faisceaux dans le bac 5 (avant la fermeture du bac par le couvercle 30, il n'est nécessaire d'effectuer qu'une faible rotation des têtes de plaques et de leurs pièces de jonction 7 et 9, puis une rotation en sens inverse, ensuite, pour venir en appui l'une contre l'autre à travers le trou 14, l'assemblage n'étant effectué ensuite qu'avec l'introduction à force de la pièce d'assemblage 11. Il n'y a donc plus de traction sur les têtes de plaque nécessitée par le déplacement important, dans le cas de l'art antérieur, où l'assemblage est effectué directement par les deux pièces de jonction comportant des portions mâle et femelle. Cette absence de traction permet de diminuer la hauteur libre au-dessus des plaques.

Dans cette figure, les têtes de plaques assemblées 8 sont liées à la première pièce de jonction 7 par le moyen d'une bague 20 montée à force sur une portion 21 de la pièce de jonction traversant un trou effectué dans les têtes de plaques assemblées 8. Il en est de même pour la deuxième pièce de jonction 9 : une bague 22 est montée à force sur une portion 23 de la pièce de jonction 9 traversant un trou effectué dans les têtes de plaques assemblées 10.

La figure 2 montre une variante dans laquelle la première pièce de jonction 7 comporte un cône auto-perçant 24. La seconde pièce de jonction 9 comporte une face d'appui 25 plane s'appliquant contre la paroi de séparation 6.

Dans ce cas, la paroi de séparation ne comporte pas, préalablement, de trou de passage 14 comme dans la figure 1.

Lors de l'assemblage en venant frapper sur la pièce d'assemblage 11 pour l'introduire dans les pièces 7 et 9, par exemple par l'intermédiaire d'une pièce d'appui 33 et d'une pièce de contre-appui 26, le cône 24 vient découper une rondelle 27 dans la paroi de séparation 6, et cette rondelle, est entraînée vers le fond du trou borgne 13 par la pièce d'assemblage 11.

Cette variante permet d'éviter d'avoir à bien centrer les deux pièces de jonction 7 et 9 dans l'axe d'un trou préexistant.

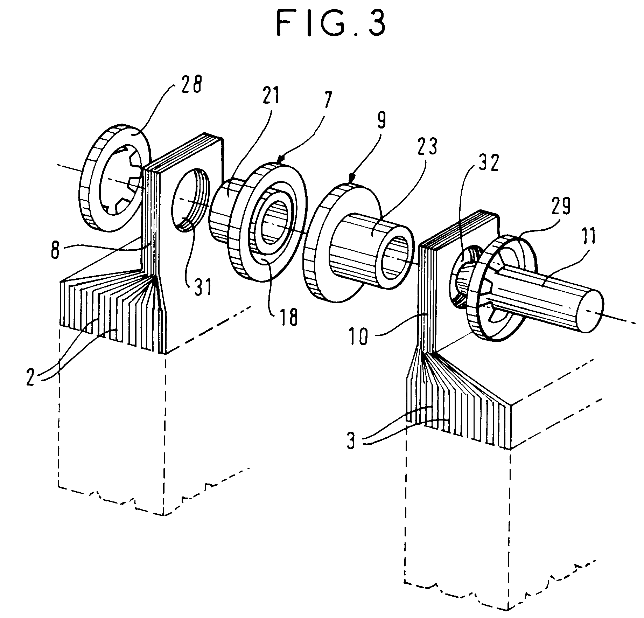

En se référant maintenant à la figure 3, on donne un exemple, parmi de nombreux moyens possibles, d'un mode de liaison des pièces de jonction 7 et 9 aux têtes de plaques assemblées 8 et 10. Sur la figure 1 cette liaison est faite par le moyen de bagues montées à force 20, 22. Ici, sur la figure 3, il s'agit de rondelles à griffes 28, 29 venant se coincer sur les portions 21 et 23 des pièces 7 et 9 après leur passage dans les trous 31 et 32 effectués dans les têtes de plaques assemblées 8 et 10.

Cette liaison peut également être effectuée par soudure.

## Revendications

1. Dispositif de traversée étanche d'une paroi isolante (6) séparant deux faisceaux (2, 3) d'un générateur électrochimique, comprenant une première pièce de jonction (7) liée à l'extrémité des têtes de plaques assemblées (8), de même polarité, d'un premier faisceau (2), une deuxième pièce de jonction (9) liée à l'extrémité des têtes de plaques assemblées (10), de même polarité, opposée à celle-ci ci-dessus, d'un deuxième faisceau (3) séparé du premier faisceau par ladite paroi isolante (6), l'une (7) des deux dites pièces de jonction comportant un trou borgne (13) d'axe (17) perpendiculaire à ladite paroi (6), la partie débouchante du trou (13) étant située du côté de ladite paroi (6), un joint d'étanchéité (19) coaxial audit trou borgne (13) s'appliquant contre ladite paroi (6) et étant logé dans une gorge (18) de ladite pièce de jonction, caractérisé en ce que l'autre (9) pièce de jonction comporte un alésage (12) traversant, coaxial audit trou borgne (13) et de même section, les deux dites pièces de jonction (7, 9) s'appuyant l'une contre l'autre au travers d'un trou de passage (14) dans ladite paroi (6) sans pénétration ni d'une pièce ni de l'autre dans ledit trou (14) de la paroi (6) d'une profondeur supérieure à l'épaisseur de ladite paroi et en ce qu'une pièce d'assemblage (11) est emmanchée à force dans ledit alésage traversant (12) et ledit trou borgne (13).

2. Dispositif selon la revendication 1, caractérisé en ce que l'une des deux dites pièces de jonction porte du côté faisant face à ladite paroi, un cône auto-perçant (24) pénétrant dans la paroi d'une profondeur correspondant à son épaisseur et s'appuyant contre la face de l'autre pièce de jonction appliquée contre ladite paroi (6).

3. Dispositif selon la revendication 2, caractérisé en ce que ledit cône auto-perçant est porté par ladite pièce de jonction (7) comportant un trou borgne (13).

## Patentansprüche

1. Vorrichtung zur dichten Durchführung durch eine isolierende Wand (6), die zwei Bündel (2, 3) eines elektrochemischen Generators trennt, umfassend ein erstes Verbindungsstück (7), das mit einem Ende der Köpfe der montierten Platten (8) gleicher Polarität eines ersten Bündels (2) verbunden ist, ein zweites Verbindungsstück (9), das mit dem Ende der Köpfe der montierten Platten (10) gleicher Polarität gegensätzlich zu der obigen, eines zweiten Bündels (3) verbunden ist, das von dem ersten Bündel durch die isolierende Wand (6) separiert ist, wobei eines (7) der zwei Verbindungsteile eine Sackbohrung (13) aufweist, mit einer Achse (17) rechtwinklig zu der Wand (6), wobei der Öffnungsbereich der Bohrung (13) am Rand der Wand (6) angeordnet ist, eine Dichtung (19) koaxial zu der Sackbohrung (13), die gegen die Wand (6) anliegt und in einer Nut (18) des Verbindungsstückes angeordnet ist, dadurch gekennzeichnet, dass das andere Verbindungsstück (7) eine Durchgangsbohrung (12) umfasst, koaxial zu der Sackbohrung (13) und mit gleichem Querschnitt, wobei die zwei Verbindungsstücke (7, 9) gegeneinander anliegen, durch eine Durchgangsbohrung (14) in der Wand (6), ohne Penetration eines der Teile in die Bohrung (14) der Wand (6) mit einer Tiefe, die größer ist, als die Dicke der Wand, und dadurch, dass ein Montageteil (11) kraftschlüssig mit der Durchgangsbohrung (12) und der Sackbohrung (13) verbunden ist.

2. Vorrichtung nach Anspruch 1, dadurch gekennzeichnet, dass eines der Verbindungsstücke auf der Seite, der der Wand gegenüber liegt, einen selbstbohrenden Konus (24) aufweist, der in die Wand mit einer Tiefe eindringt, die der Dicke der selben entspricht und gegen die Seite des anderen Verbindungsstückes zur Anlage kommt, das gegen die Wand (6) anliegt.

3. Vorrichtung nach Anspruch 2, dadurch gekennzeichnet, dass der selbstbohrende Konus von dem Verbindungsteil (7) getragen wird, das mit der Sackbohrung (13) versehen ist.

## Claims

1. A sealed feed-through device for an insulative partition wall (6) between two electrode assemblies (2, 3) of a storage battery, comprising a first connecting member (7) connected to ends of assembled plate heads (8) of the same polarity of a first assembly (2) and a second connecting member (9) connected to ends of assembled plate heads (10) of the same opposite polarity of a second assembly (3) separated from the first assembly by said insulative wall (6), one (7) of said two connecting members including a blind hole (13) having an axis (17) perpendicular to said wall (6) and an open end facing said wall (6), a seal (19) coaxial with said blind hole (13) and adapted to be pressed against said wall (6) being housed in a groove (18) in said connecting member, characterized in that the other (9) connecting member has a bore (12) through it coaxial with and having the same section as said blind hole (13), said two connecting members (7, 9) being adapted to press one against the other through a hole (14) in said wall (6) without either member penetrating into said hole (14) in the wall (6) to a depth exceeding the thickness of said wall and in that an assembly member (11) is forcibly inserted into said bore (12) and said blind hole (13).

2. The device claimed in claim 1 characterized in that one of said two connecting members has on the side facing said wall a self-piercing cone (24) penetrating the wall to a depth corresponding to its thickness and adapted to be pressed against the face of the other connecting member pressed against said wall (6).

3. The device claimed in claim 2 characterized in that said self-piercing cone is carried by said connecting member (7) including a blind hole (13).
